# EUROPÄISCHE PATENTSCHRIFT

(11) **EP 2 707 215 B1**
(45) Veröffentlichungstag und Bekanntmachung des Hinweises auf die Patenterteilung: **20.02.2019**
(21) Anmeldenummer: 12719260.7
(22) Anmeldetag: 19.04.2012
(51) Int. Cl.: B30B 11/08, B30B 15/00

(54) **STEMPELANORDNUNG FÜR EINE PRESSE UND PRESSE**
PUNCH ARRANGEMENT FOR A PRESS AND PRESS
ENSEMBLE POINÇON POUR UNE PRESSE ET PRESSE

(30) Priorität: 10.05.2011 DE 102011101289
(43) Veröffentlichungstag der Anmeldung: 19.03.2014
(73) Patentinhaber: Fette Compacting GmbH, 21493 Schwarzenbek (DE)
(72) Erfinder: MEISSNER, Friedrich, 21493 Schwarzenbek (DE); MALICK, Daniel, 22926 Ahrensburg (DE)
(74) Vertreter: Hauck Patentanwaltspartnerschaft mbB
(86) Internationale Anmeldenummer: PCT/EP2012/001687
(87) Internationale Veröffentlichungsnummer: WO 2012/152371

(56) Entgegenhaltungen:
- EP-A1- 2 186 632
- WO-A1-02/064356
- WO-A1-2004/085140
- DE-A1- 19 926 934
- DE-U1- 29 516 577
- GB-A- 2 261 267
- JP-U- H04 129 599

## Beschreibung

Die Erfindung betrifft eine Stempelanordnung für eine Presse, insbesondere eine Rundläuferpresse, umfassend mindestens einen Pressstempel mit einem Stempelkopf, einem Werkzeugbereich und einem sich zwischen Stempelkopf und Werkzeugbereich erstreckenden Stempelschaft, weiter umfassend mindestens eine Stempelführung mit mindestens einer Führungsbohrung, in der der Stempelschaft des mindestens einen Pressstempels axial beweglich geführt ist, und mindestens eine den Stempelschaft zumindest abschnittsweise umgebende längenveränderliche Abdichtmanschette, die mit ihrem ersten Ende an dem Stempelschaft oder an dem Werkzeugbereich des Pressstempels gehalten ist. Die Erfindung betrifft außerdem eine Presse und eine Rundläuferpresse mit einer solchen Stempelanordnung.

Es ist bekannt, über längenveränderliche Abdichtmanschetten eine Abdichtung zwischen einem Pressraum einer Presse und einer Stempelführung, insbesondere Führungsbohrungen, vorzusehen. Eine solche Anordnung ist beispielweise in DE 295 16 577 U1 oder DE 199 26 934 A1 beschrieben. Dabei ist eine als Faltenbalg ausgebildete Abdichtmanschette an ihrem einen Ende mit einem ringförmigen Befestigungsabschnitt in einer Ringnut eines Pressstempels gehalten. An ihrem anderen Ende ist die Abdichtmanschette ebenfalls mit einem ringförmigen Befestigungsabschnitt in einer Ringnut eines an der Stempelführung ausgebildeten Halteabschnitts gehalten. Der Halteabschnitt mit der Ringnut steht aus der Führungsbohrung der Stempelführung nach unten heraus.

Bei der bekannten Konstruktion hat der Faltenbalg in der Ringnut des aus der Führungsbohrung nach unten herausstehenden Halteabschnitts einen vergleichsweise lockeren Sitz. Im Zuge der schnellen Axialbewegungen der Pressstempel im Betrieb der Presse kann es daher zu einem Lösen des Faltenbalgs aus der Ringnut des Halteabschnitts kommen. Die Abdichtung zwischen dem Pressraum und der Führungsbohrung ist dann nicht mehr gewährleistet, so dass es zu Beschädigungen der Stempelführung und Verunreinigungen der hergestellten Presslinge und damit zu Produktionsausschuss kommen kann. Es kann auch zu einer Verpressung des gelösten Faltenbalgs kommen. Ein weiterer Nachteil der bekannten Ausgestaltung liegt darin, dass der Halteabschnitt den Maximalhub des Pressstempels begrenzt. Außerdem ist die Reinigung bei der bekannten Konstruktion vergleichsweise aufwendig.

Aus JPH 04129599 U ist bekanntgeworden, Führungsbohrungen für Pressstempel mit einer Kombination aus Abdichtmanschette und Abstreifring ein Eindringen von Verschmutzungen zu verhindern. Der Abstreifring ist doppellippig und sitzt in einer Ausnehmung am Ende der Führungsbohrungen, welche dem Werkzeugteil der Pressstempel zugekehrt ist.

Abstreifelemente, die auch für sich bekannt sind (WO 2004/085140 A1) sitzen im Bereich des dem Pressraum zugewandten Ausgangs der Führungsbohrung und liegen in Umfangsrichtung des Stempelschafts dicht an dem Pressstempel an. Im Zuge der im Betrieb auftretenden Hubbewegungen der Pressstempel streift das Abstreifelement dann in Axialrichtung über die Oberfläche des Stempelschafts und streift dabei Verunreinigungen von dem Stempelschaft ab. Die Abstreifelemente werden bei bekannten Vorrichtungen entweder mit ihrem Metallkäfig oder durch eine geeignete Außengeometrie in eine Nut gepresst. Die Befestigungsvorrichtungen für die Abstreifelemente unterscheiden sich bei den bekannten Vorrichtungen von den Befestigungsvorrichtungen für Abdichtmanschetten. Hierdurch ist ein Wechsel zwischen Abdichtmanschetten und Abstreifelementen nur in aufwendiger Weise möglich. Dies gilt insbesondere bei Rundläuferpressen, wenn der Rotor in der Tablettenpresse verbleiben soll. In der

Regel sind Adapterringe für den Wechsel zwischen Abdichtmanschetten und Abstreifelementen erforderlich, die nur mit speziellen Werkzeugen montierbar und demontierbar sind. Dies führt zu langen Umrüstzeiten und bei unsachgemäßem Gebrauch zu Beschädigungen.

Ausgehend von dem erläuterten Stand der Technik liegt der Erfindung daher die Aufgabe zugrunde, eine Stempelanordnung, eine Presse und eine Rundläuferpresse der eingangs genannten Art bereitzustellen, bei denen die Betriebssicherheit erhöht, der maximale Stempelhub vergrößert, die Umrüstung bei einem Wechsel zwischen Abdichtmanschette und Abstreifring vereinfacht und die dafür notwendige Umrüstzeit verkürzt sowie die Reinigung vereinfacht wird.

Die Erfindung löst diese Aufgabe durch die Gegenstände des Anspruchs 1.

Vorteilhafte Ausgestaltungen finden sich in den abhängigen Ansprüchen, der Beschreibung und den Figuren.

Für eine Stempelanordnung der eingangs genannten Art löst die Erfindung die Aufgabe dadurch, dass die Abdichtmanschette mit ihrem zweiten Ende an einer Innenwand der Führungsbohrung gehalten ist, wobei das zweite Ende der Abdichtmanschette bei in der Führungsbohrung befindlichem Stempelschaft zwischen der Innenwand der Führungsbohrung und dem Stempelschaft in einer formschlüssigen Halteposition so gefangen ist, dass sie bei in der Führungsbohrung eingesetztem Pressstempel nicht gelöst werden kann.

Die erfindungsgemäße Stempelanordnung ist zum Einsatz in einer Presse vorgesehen, in der ein beispielsweise pulverförmiges Material von den Pressstempeln zu Presslingen verpresst wird. Bei den Presslingen kann es sich um Tabletten handeln. Bei der Presse kann es sich um eine an sich bekannte Rundläuferpresse handeln. Die Stempelanordnung weist einen Pressstempel oder eine Vielzahl von Pressstempeln auf, beispielsweise eine Vielzahl von oberen und unteren Pressstempeln. Die Stempelanordnung weist weiterhin eine obere und/oder untere Stempelführung für die Pressstempel auf mit mindestens einer Führungsbohrung, bevorzugt einer Vielzahl von Führungsbohrungen. In jeder Führungsbohrung ist jeweils ein Pressstempel mit seinem Schaft axial beweglich geführt.

Die erfindungsgemäße Stempelanordnung umfasst weiterhin mindestens eine Abdichtmanschette, vorzugsweise eine Vielzahl von Abdichtmanschetten, wobei jeweils mindestens eine Abdichtmanschette den Schaft jeweils eines Pressstempels abschnittsweise umgibt. Die Abdichtmanschette kann dabei den gesamten im Zuge des Axialhubs des Pressstempels aus der Führungsbohrung heraustretenden Abschnitt des Stempel schafts umgeben. Die Abdichtmanschette soll einerseits eine Verunreinigung des Pressraums beispielsweise durch in den Stempelführungen vorgesehenes Schmiermittel für die Stempelschäfte vermeiden. Andererseits soll sie das Eindringen von Staub, beispielsweise durch das in der Regel pulverförmige zu verpressende Material, in die Stempelführung, insbesondere die Führungsbohrung, verhindern. Dazu ist die Abdichtmanschette mit ihrem einen Ende an dem Stempelschaft, insbesondere im Bereich des dem Werkzeugbereich zugewandten Endes des Stempelschafts, oder an dem Stempelwerkzeug befestigt. Die Abdichtmanschette kann an diesem Ende beispielsweise mit einem Befestigungsring in einer Ringnut des Schafts oder des Stempelwerkzeugs sitzen. Es sind allerdings auch andere Befestigungsarten denkbar (z.B. form- und/oder kraftschlüssige Fixierung, Klemmung etc.). Dieses Ende der Abdichtmanschette bewegt sich bei einer axialen Bewegung des Pressstempels im Betrieb mit dem Pressstempel in axialer Richtung. Das andere Ende der Abdichtmanschette ist erfindungsgemäß an einer Innenwand der Führungsbohrung gehalten, insbesondere nahe dem dem Pressraum zugewandten Ende der Führungsbohrung. Das Halten dieses Endes der Abdichtmanschette erfolgt derart, dass die Abdichtmanschette im in die Führungsbohrung eingesetzten Zustand des Pressstempels zwischen der Innenwand der Führungsbohrung und dem Stempelschaft gefangen ist. Das bedeutet, dass sich dieses Ende der Abdichtmanschette bei in die Führungsbohrung eingesetztem Pressstempel nicht aus seiner Halteposition an der Innenwand der Führungsbohrung, die nunmehr auch zur formschlüssigen Fangposition wird, und damit aus der Führungsbohrung lösen kann.

Bei der Installation der Stempelanordnung wird zunächst die Abdichtmanschette mit ihrem zweiten Ende in ihre Halteposition an der Innenwand der Führungsbohrung eingesetzt. Anschließend wird der Pressstempel in die Führungsbohrung eingesetzt, so dass sich die Abdichtmanschette danach mit ihrem zweiten Ende nicht mehr aus der Führungsbohrung lösen kann und sich somit in ihrer Halte- und Fangposition befindet. Anschließend kann die Abdichtmanschette mit ihrem anderen Ende an dem Stempelschaft oder Stempelwerkzeug befestigt werden. Ein unerwünschtes Ablösen der Abdichtmanschette und damit ein Verlust der Dichtwirkung können erfindungsgemäß sicher vermieden werden. Darüber hinaus wird zusätzlicher Raum für den maximalen Stempelhub in axialer Richtung gewonnen, da die Haltemittel für das zweite Ende der Abdichtmanschette innerhalb der Führungsbohrung vorgesehen sind und nicht wie beim Stand der Technik aus der Führungsbohrung in Richtung des Pressraums herausragen und damit den Hubweg des Pressstempels begrenzen. Außerdem ist die Reinigung der erfindungsgemäßen Konstruktion im Vergleich zum Stand der Technik einfacher.

In an sich bekannter Weise wird bei einer axialen Bewegung des Pressstempels die Abdichtmanschette in axialer Richtung zwischen ihrem ortsfest an der Innenwand der Führungsbohrung gehaltenen zweiten Ende und ihrem an dem Pressstempel befestigten und mit diesem beweglichen ersten Ende gestaucht bzw. gedehnt. Die Abdichtmanschette kann daher in besonders praxisgemäßer Weise aus einem Elastomer bestehen.

Das zweite Ende der Abdichtmanschette kann einen Befestigungsring umfassen, der in einer in der Innenwand der Führungsbohrung ausgebildeten Ringnut, die sich zum Stempelschaft hin öffnet, aufgenommen ist. Der Befestigungsring der Abdichtmanschette wird in die Ringnut eingesetzt. Somit wird ein besonders sicherer Halt an der Innenwand der Führungsbohrung erreicht. Der Befestigungsring kann elastisch ausgebildet sein, so dass er in der Ringnut verrasten bzw. in diese eingeclipst werden kann.

Nach einer weiteren Ausgestaltung kann das zweite Ende der Abdichtmanschette bei in der Führungsbohrung befindlichem Stempelschaft eine Dichtung zwischen der Innenwand der Führungsbohrung und dem Stempelschaft bilden. Die Dichtung ist dabei derart, dass insbesondere Verunreinigungen aus dem Pressraum, wie Pressstaub, oder Verunreinigungen aus der Führungsbohrung, wie Schmiermittel, nicht an der Abdichtmanschette vorbei aus dem Pressraum in die Führungsbohrung oder umgekehrt gelangen können. Die bevorzugte elastische Ausbildung des zweiten Endes der Abdichtmanschette erlaubt es, dieses zweite Ende unter Vorspannung in die Ringnut einzubetten, wodurch die angestrebte Abdichtwirkung noch verstärkt wird. Die Abdichtmanschette ist als Faltenbalg oder Wellrohr ausgebildet.

Eine weitere Ausgestaltung der Erfindung sieht daher vor, dass die erfindungsgemäße Presse weiterhin mindestens ein Abstreifelement umfasst, welches ebenfalls an der Innenwand der Führungsbohrung gehalten ist, wobei es bei in der Führungsbohrung befindlichem Stempelschaft ebenfalls zwischen der Innenwand der Führungsbohrung und dem Stempelschaft gefangen ist, wobei das Abstreifelement einen Abstreifring umfasst, der bei in der Führungsbohrung befindlichem Stempelschaft dicht und vollumfänglich am Umfang des Stempelschafts anliegt und bei einer axialen Bewegung des Stempels in axialer Richtung an dem Stempelschaft entlang streift, und wobei das Abstreifelement mit identischen Halte- und Fangmitteln an der Innenwand der Führungsbohrung gehalten ist wie die Abdichtmanschette. Insbesondere liegt der Abstreifring bei dieser Ausgestaltung in Umfangsrichtung vollständig dicht an dem Stempelschaft an.

Das erfindungsgemäße Abstreifelement bzw. die erfindungsgemäßen Abstreifelemente besitzen einen in der Regel elastischen Abdichtring, der dicht an dem Umfang des Stempelschafts anliegt und bei der im Betrieb auftretenden Axialbewegung des Pressstempels dicht an diesem entlang streift. Hierdurch werden in an sich bekannter Weise Verunreinigungen von dem Pressstempel in beiden axialen Richtungen abgestreift, unabhängig davon, ob diese aus dem Pressraum (z.B. Pressstaub) oder aus der Stempelführung (z.B. Schmiermittel für die Stempel) stammen. Die Verunreinigungen können daher nicht aus dem Pressraum in die Führungsbohrung oder umgekehrt gelangen. Der Abdichtring kann im Querschnitt beispielsweise ein C-Profil besitzen, wobei die beiden freien Enden des C-Profils an der Oberfläche des Stempelschafts anliegen. Hierdurch wird eine besonders sichere Barriere zwischen der Führungsbohrung und dem Pressraum geschaffen.

Die Abstreifelemente und Abdichtmanschetten werden erfindungsgemäß in zueinander kompatibler Weise an der Innenwand der Führungsbohrung befestigt, wobei diese Befestigung das Halten und Fangen beinhaltet. Dazu können die Halte- und Fangmittel für die Abstreifelemente identisch zu den Halte- und Fangmitteln für die Abdichtmanschetten ausgebildet sein. Es ist somit ein besonders einfacher und schneller Wechsel zwischen Anwendungen mit Abdichtmanschetten und Anwendungen mit Abstreifelementen möglich, ohne dass Adapterringe oder besondere Werkzeuge für die Umrüstung erforderlich sind. Hierdurch wiederum ist auch die Reinigung bei entnommenen Abstreifelementen bzw. Abdichtmanschetten gegenüber dem Stand der Technik vereinfacht. Gleichzeitig wird ein unerwünschtes Lösen sowohl der Abdichtmanschetten als auch der Abstreifelemente sicher vermieden. Wiederum kann das mindestens eine Abstreifelement einen Befestigungsring umfassen, der in einer in der Innenwand der Führungsbohrung aufgenommenen Ringnut aufgenommen ist. Der Befestigungsring kann identisch ausgebildet sein zu dem oben erwähnten Befestigungsring der Abdichtmanschette.

Die Erfindung betrifft auch eine Rundläuferpresse mit einem im Regelfall um eine vertikale Achse drehbaren Rotor, wobei der Rotor eine obere und eine untere Stempelanordnung umfasst mit einer oberen und unteren Stempelführung sowie mit einer Vielzahl oberer und einer Vielzahl unterer Pressstempel und mit einer Matrizenschreibe zwischen den Stempelführungen, wobei die

Pressstempel mit Aufnahmen der Matrizenscheibe zusammenwirken, ferner mit mindestens einer Füll- und Dosierstation, in der zu verpressendes Material in die Aufnahmen gefüllt wird, sowie mit mindestens einer Druckstation, in der das in die Aufnahmen gefüllte Material durch die oberen und unteren Pressstempel zu Presslingen verpresst wird, wobei die obere und/oder die untere Stempelanordnung in der erfindungsgemäßen Weise ausgebildet ist. Bei den Aufnahmen kann es sich um sogenannte Matrizenbohrungen handeln. In den Matrizenbohrungen können Matrizenbuchsen angeordnet sein. Dies ist aber nicht zwingend erforderlich. Ebenso können die Pressstempel unmittelbar mit den Matrizenbohrungen zusammenwirken. Die Matrizenscheibe kann einstückig ausgebildet sein. Sie kann jedoch auch aus Matrizensegmenten bestehen.

Ausführungsbeispiele der Erfindung werden nachfolgend anhand von Figuren näher erläutert. Es zeigen schematisch:
- Fig. 1: einen Teil einer Rundläuferpresse in einer in die Zeichnungsebene abgewickelten Darstellung,
- Fig. 2: einen Ausschnitt einer erfindungsgemäßen Stempelanordnung im Bereich eines zweiten Endes einer Abdichtmanschette in einer Schnittansicht,
- Fig. 3: den Ausschnitt aus Fig. 2 nach einem weiteren Ausfiihrungsbeispiel im Bereich des zweiten Endes der Abdichtmanschette und eines Abstreifelementes in einer Schnittansicht.

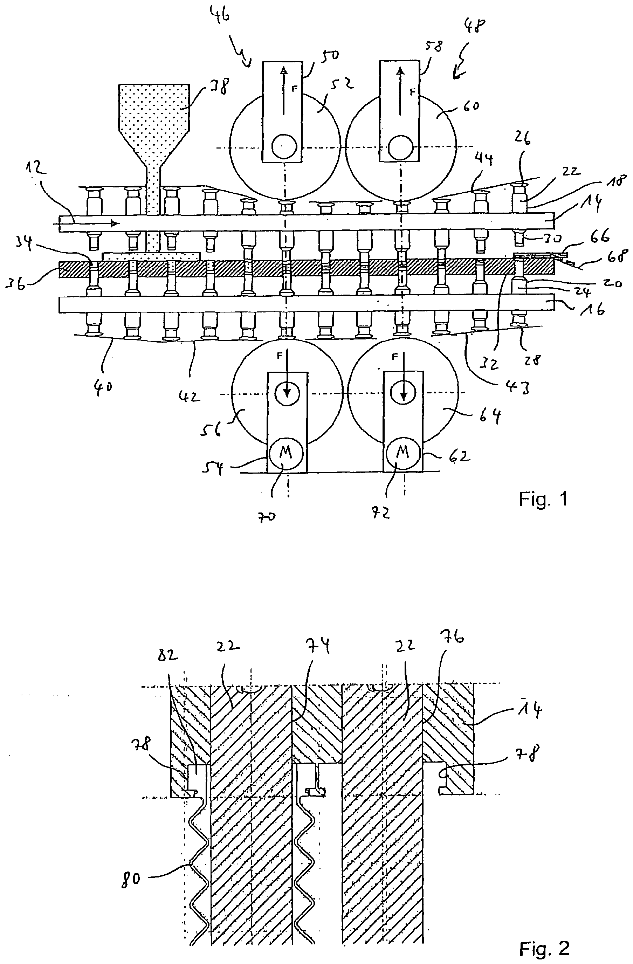

Soweit nichts anderes angegeben ist, bezeichnen in den Figuren gleiche Bezugszeichen gleiche Gegenstände. Fig. 1 zeigt den Aufbau einer an sich bekannten Rundläufertablettenpresse. Es ist insbesondere der Rotor der Rundläufertablettenpresse dargestellt, der von einem nicht dargestellten Drehantrieb um eine im Regelfall vertikale Achse rotiert wird, wie durch den Pfeil 12 veranschaulicht. Der Rotor umfasst eine Stempelanordnung mit einer oberen Stempelführung 14 und einer unteren Stempelführung 16. Die obere und untere Stempelführung 14, 16 umfassen jeweils Führungsbohrungen zur Aufnahme von Oberstempeln 18 und Unterstempeln 20 der Presse. In an sich bekannter Weise umfassen die Ober- und Unterstempel 18, 20 jeweils einen Stempelschaft 22, 24, der sich jeweils zwischen einem Stempelkopf 26, 28 und einem Werkzeugbereich 30, 32 erstreckt. Die Ober- und Unterstempel 18, 20 wirken mit ihren Werkzeugbereichen 30, 32 mit Aufnahmen 34, beispielsweise Matrizenbohrungen, einer Matrizenscheibe 36 zusammen, die zwischen den Stempelführungen 14, 16 angeordnet ist. Die Rundläufertablettenpresse umfasst weiterhin eine Füll- und Dosierstation mit einer Fülleinrichtung 38, über die den Aufnahmen 34 pulverförmiges Pressmaterial zugeführt wird. Die Füll- und Dosierstation der Presse umfasst weiterhin Füllkurvenelemente 40 und Dosierkurvenelemente 42. Der Rotor umfasst darüber hinaus untere Ausstoßkurvenelemente 43 und obere Aufzugskurvenelemente 44.

In Drehrichtung 12 des Rotors der Fülleinrichtung 38 nachgeordnet befindet sich eine Vordruckstation 46 und eine Hauptdruckstation 48. Die Vordruckstation 46 besitzt eine obere Druckeinrichtung 50 mit einer oberen Druckrolle 52 und eine untere Druckeinrichtung 54 mit einer unteren Druckrolle 56. Die Hauptdruckstation 48 umfasst ebenfalls eine obere Druckeinrichtung 58 mit einer oberen Druckrolle 60 und eine untere Druckeinrichtung 62 mit einer unteren Druckrolle 64. Die Ober- und Unterstempel 18, 20 wirken mit den Druckrollen 52, 56, 60, 64 in an sich bekannter Weise zusammen, um das in die Aufnahmen 34 gefüllte Pressmaterial zu Tabletten zu verpressen. In Drehrichtung 12 der Vor- und Hauptdruckstation 46, 48 nachgeordnet befindet sich eine Auswerferstation mit einem Abstreifer 66, der zu diesem Zeitpunkt von den Unterstempeln 20 auf die Oberfläche der Matrizenscheibe 36 geschobene Presslinge bzw. Tabletten einem Tablettenablauf 68 zuführt.

Es sei noch erwähnt, dass die unteren Druckeinrichtungen 54, 62 jeweils einen motorischen Antrieb 70, 72 umfassen, mit dem der vertikale Abstand zwischen den oberen Druckrollen 52, 60 und den unteren Druckrollen 56, 64 variiert werden kann. Wie in Fig. 1 durch die mit F gekennzeichneten Pfeile veranschaulicht, wirken im Betrieb der Presse zwischen den Ober- bzw. Unterstempeln 18, 20 und den Druckrollen 52, 56, 60, 64 Kräfte.

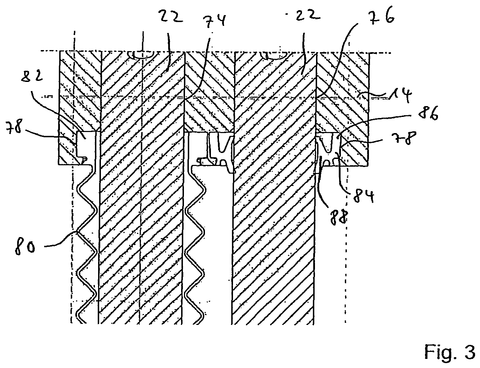

In Fig. 2 ist in einem vertikalen Schnitt ein Detail einer Stempelanordnung gezeigt, wie sie bei der in Fig. 1 gezeigten Rundläufertablettenpresse vorgesehen sein kann. Zu erkennen ist die obere Stempelführung 14, wobei in der Darstellung in Fig. 2 zwei Führungsbohrungen 74, 76 der Stempelführung 14 zu erkennen sind. In den Führungsbohrungen 74, 76 ist jeweils ein Pressstempel 18 in axialer Richtung beweglich geführt. Von den Pressstempeln 18 sind in Fig. 2 jeweils die Stempelschäfte 22 zu erkennen. Es versteht sich, dass sämtliche Führungsbohrungen der oberen Stempelführung 14 und gegebenenfalls auch der unteren Stempelführung 16 in der in Fig. 2 und auch weiter unten zu Fig. 3 erläuterten Weise ausgestaltet sein können. Dasselbe gilt für die oberen und unteren Pressstempel 18, 20. Es versteht sich weiterhin, dass die obere und/oder die untere Stempelführung 14, 16 auch mehrteilig aufgebaut sein kann.

In Fig. 2 ist zu erkennen, dass die Führungsbohrungen 74, 76 an ihrem in Fig. 2 unteren, dem Pressraum mit der Matrizenscheibe 36 zugeordneten Ende an ihrer Innenwand mit einer Ringnut 78 versehen sind. An dem in der in Fig. 2 linken Führungsbohrung 74 angeordneten Pressstempel 18 ist eine Abdichtmanschette 80 in Form eines Faltenbalgs oder Wellrohres angeordnet, von der in Fig. 2 nur das obere, zweite Ende zu erkennen ist. Die Abdichtmanschette 80 besteht beispielsweise aus einem Elastomer und ist in Bewegungsrichtung der Pressstempel 18 längenveränderlich. Das in Fig. 2 nicht zu erkennende untere, erste Ende der Abdichtmanschette 80 ist über geeignete Befestigungsmittel an dem Stempelschaft 22 oder dem Werkzeugbereich 30 des jeweiligen Presstempels 18 befestigt. Das in Fig. 2 dargestellte obere, zweite Ende der Abdichtmanschette 80 weist einen elastischen Befestigungsring 82 auf, der in der Ringnut 78 der Führungsbohrung 74 angeordnet ist. Insbesondere wird der elastische Befestigungsring 82 bei noch nicht in die Führungsbohrung 74 eingesetztem Pressstempel 18 in die Ringnut 78 eingeclipst bzw. in dieser verrastet. Anschließend wird der Pressstempel 18 mit seinem Stempelschaft 22 in die Führungsbohrung 74 eingesetzt. Dadurch wird die Abdichtmanschette 80 mit ihrem Befestigungsring 82 zwischen der durch die Ringnut 78 gebildeten Innenwand der Führungsbohrung 74 und dem Stempelschaft 22 gefangen. Wie in Fig. 2 unmittelbar zu erkennen, kann sich die Abdichtmanschette 80 mit ihrem Befestigungsring 82 in diesem Zustand nicht mehr aus der Ringnut 78 lösen. In der rechten Führungsbohrung 76 in Fig. 2 ist aus Veranschaulichungsgründen keine Abdichtmanschette 80 gezeigt. Es versteht sich, dass auch hier eine entsprechende Abdichtmanschette 80 vorgesehen sein kann.

In Fig. 3 ist ein weiteres Ausführungsbeispiel der erfindungsgemäßen Stempelanordnung aus Fig. 2 gezeigt. Dieses Ausführungsbeispiel entspricht weitgehend dem Ausfiihrungsbeispiel nach Fig. 2. Im Unterschied zu Fig. 2 ist jedoch in der Ringnut 78 der in den Figuren 2 und 3 rechten Stempelanordnung 76 ein Abstreifelement 84 angeordnet. Das Abstreifelement 84 besitzt ebenfalls einen elastischen Befestigungsring 86, der in seinen geometrischen Abmessungen so ausgestaltet ist, dass er in dieselbe Ringnut 78 rastend eingesetzt oder in diese eingeclipst werden kann, wie der Befestigungsring 82 der Abdichtmanschette 80. Das Abstreifelement 84 umfasst weiterhin einen im Querschnitt C-förmigen Abdichtring 88, der über den Umfang des Stempelschafts 22 mit seinen beiden Enden dicht an der Oberfläche des Stempelschafts 22 anliegt. Das Abstreifelement 84 kann beispielsweise aus einem geeigneten Elastomer bestehen.

Indem die Befestigungsringe 82, 86 der Abdichtmanschetten 80 einerseits und der Abstreifelemente 84 andererseits kompatibel zueinander ausgestaltet sind, können die Abdichtmanschetten 80 und die Abstreifelemente 84 in einfacher Weise in dieselben Ringnuten 78 der Führungsbohrungen 74, 76 eingesetzt werden. Es ist auf diese Weise ein schneller und einfacher Wechsel zwischen Abdichtmanschetten 80 und Abstreifelementen 84 möglich, ohne dass Adapter oder spezielle Werkzeuge erforderlich wären.

## Patentansprüche

1. Stempelanordnung für eine Presse, insbesondere eine Rundläuferpresse, umfassend mindestens einen Pressstempel (18, 20) mit einem Stempelkopf (26, 28), einem Werkzeugbereich (30, 32) und einem sich zwischen Stempelkopf (26, 28) und Werkzeugbereich (30, 32) erstreckenden Stempelschaft (22, 24), weiter umfassend mindestens eine Stempelführung (14, 16) mit mindestens einer Führungsbohrung (74, 76), in der der Stempelschaft (22, 24) des mindestens einen Pressstempels (18, 20) axial beweglich geführt ist, und mindestens eine den Stempelschaft (22, 24) zumindest abschnittsweise umgebende längenveränderliche Abdichtmanschette (80), die mit ihrem ersten Ende an dem Stempelschaft (22, 24) oder an dem Werkzeugbereich (30, 32) des Pressstempels (18, 20) gehalten ist,
wobei die Abdichtmanschette (80) mit ihrem zweiten Ende an einer Innenwand der Führungsbohrung (74, 76) gehalten ist, dadaurch gekennzeichnet, dass das zweite Ende der Abdichtmanschette (80) bei in der Führungsbohrung (74, 76) befindlichem Stempelschaft (22, 24) zwischen der Innenwand der Führungsbohrung (74, 76) und dem Stempelschaft (22, 24) in einer formschlüssigen Halteposition so gefangen ist, dass sie bei in der Führungsbohrung eingesetztem Pressstempel nicht gelöst werden kann, wobei das zweite Ende der Abdichtmanschette (80) einen Befestigungsring (82) umfasst, der in einer in der Innenwand der Führungsbohrung (74, 76) ausgebildeten Ringnut (78) aufgenommen ist und wobei die Abdichtmanschette als Faltenbalg oder Wellrohr ausgebildet ist.

2. Stempelanordnung nach Anspruch 1, **dadurch gekennzeichnet, dass** das zweite Ende der Abdichtmanschette (80) bei in der Führungsbohrung (74, 76) befindlichem Stempelschaft (22, 24) eine Dichtung zwischen der Innenwand der Führungsbohrung (74, 76) und dem Stempelschaft (22, 24) bildet und wobei die Abdichtmanschette (80) als Faltenbalg oder Wellrohr ausgebildet ist.

3. Stempelanordnung nach Anspruch 1 oder 2, **dadurch gekennzeichnet, dass** das zweite Ende der Abdichtmanschette (80) unter Vorspannung in der Ringnut (78) Aufnahme findet.

4. Stempelanordnung nach einem der Ansprüche 1 bis 3, **dadurch gekennzeichnet, dass** das zweite Ende der Abdichtmanschette (80) elastisch ausgebildet und in der Ringnut (78) verrastet oder in diese eingeclipst ist.

5. Stempelanordnung nach einem der vorhergehenden Ansprüche, **dadurch gekennzeichnet, dass** sie weiterhin mindestens ein Abstreifelement (84) umfasst, welches ebenfalls an der Innenwand der Führungsbohrung (74, 76) gehalten ist, wobei es bei in der Führungsbohrung (74, 76) befindlichem Stempelschaft (22, 24) ebenfalls zwischen der Innenwand der Führungsbohrung (74, 76) und dem Stempelschaft (22, 24) gefangen ist, wobei das Abstreifelement (84) einen Abstreifring (88) umfasst, der bei in der Führungsbohrung (74, 76) befindlichem Stempelschaft (22, 24) dicht am Umfang des Stempelschafts (22, 24) anliegt und bei einer axialen Bewegung des Pressstempels (18, 20) in axialer Richtung an dem Stempelschaft (22, 24) entlang streift, und wobei das Abstreifelement (84) mit identischen Halte- und Fangmitteln an der Innenwand der Führungsbohrung (74, 76) gehalten ist wie die Abdichtmanschette (80).

6. Stempelanordnung nach Anspruch 5, **dadurch gekennzeichnet, dass** das Abstreifelement (84) einen Befestigungsring (86) umfasst, der in einer in der Innenwand der Führungsbohrung (74, 76) ausgebildeten Ringnut (78) aufgenommen ist

7. Presse umfassend mindestens eine Stempelanordnung nach einem der vorhergehenden Ansprüche.

8. Rundläuferpresse mit einem drehbaren Rotor, wobei der Rotor eine obere und eine untere Stempelanordnung umfasst mit einer oberen und unteren Stempelführung (14, 16) sowie mit einer Vielzahl oberer und einer Vielzahl unterer Pressstempel (18, 20) und mit einer Matrizenschreibe (36) zwischen den Stempelführungen (14, 16), wobei die Pressstempel (18, 20) mit Aufnahmen (34) der Matrizenscheibe (36) zusammenwirken, ferner mit mindestens einer Füll- und Dosierstation, in der zu verpressendes Material in die Aufnahmen (34) gefüllt wird, sowie mit mindestens einer Druckstation (46, 48), in der das in die Aufnahmen (34) gefüllte Material durch die oberen und unteren Pressstempel (18, 20) zu Presslingen verpresst wird, **dadurch gekennzeichnet, dass** die obere und/oder die untere Stempelanordnung nach einem der Ansprüche 1 bis 6 ausgebildet ist.

## Claims

1. A punch arrangement for a press, in particular a rotary press, comprising at least one press punch (18, 20) having a punch head (26, 28), a die region (30, 32) and a punch shaft (22, 24) extending between the punch head (26, 28) and the die region (30, 32), further comprising at least one punch guide (14, 16) having at least one guide hole (74, 76) in which the punch shaft (22, 24) of the at least one press punch (18, 20) is guided so as to be axially movable, and at least one sealing sleeve (80) that is variable in length and that surrounds the punch shaft (22, 24) at least in sections, which is held by the first end thereof on the punch shaft (22, 24) or on the die region (30, 32) of the press punch (18, 20), the sealing sleeve (80) being held by the second end thereof on an inner wall of the guide hole (74, 76), **characterized in that**, when the punch shaft (22, 24) is in the guide hole (74, 76), the second end of the sealing sleeve (80) is held captive in a positive holding position between the inner wall of the guide hole (74, 76) and the punch shaft (22, 24) in such a way that it cannot be released when the press punch is inserted in the guide hole, the second end of the sealing sleeve (80) comprising a fastening ring (82) which is accommodated in an annular groove (78) formed in the inner wall of the guide hole (74, 76), and the sealing sleeve being designed as a boot or corrugated pipe.

2. A punch arrangement according to claim 1, **characterized in that** the second end of the sealing sleeve (80) forms a seal between the inner wall of the guide hole (74, 76) and the punch shaft (22, 24) when the punch shaft (22, 24) is in the guide hole (74, 76), and the sealing sleeve (80) being designed as a boot or corrugated pipe.

3. A punch arrangement according to claim 1 or 2, **characterized in that** the second end of the sealing sleeve (80) is accommodated under pretension in the annular groove (78).

4. A punch arrangement according to any of claims 1 to 3, **characterized in that** the second end of the sealing sleeve (80) is designed to be elastic and is latched or clipped in the annular groove (78).

5. A punch arrangement according to any of the preceding claims, **characterized in that** it further comprises at least one scraper element (84) which is also held on the inner wall of the guide hole (74, 76), said scraper element also being held captive between the inner wall of the guide hole (74, 76) and the punch shaft (22, 24) when the punch shaft (22, 24) is in the guide hole (74, 76), the scraper element (84) comprising a scraper ring (88) that bears tightly against the periphery of the punch shaft (22, 24) when the punch shaft (22, 24) is in the guide hole (74, 76) and that scrapes along the punch shaft (22, 24) in an axial direction during axial movement of the press punch (18, 20), and the scraper element (84) being held on the inner wall of the guide hole (74, 76) with the same holding and capturing means as the sealing sleeve (80).

6. A punch arrangement according to claim 5, **characterized in that** the scraper element (84) comprises a fastening ring (86) that is accommodated in an annular groove (78) formed in the inner wall of the guide hole (74, 76).

7. A press comprising at least one punch arrangement according to any of the preceding claims.

8. A rotary press comprising a rotatable rotor, the rotor comprising an upper and a lower punch arrangement having an upper and lower punch guide (14, 16), a plurality of upper and a plurality of lower press punches (18, 20) and a die plate (36) between the punch guides (14, 16), the press punches (18, 20) interacting with cavities (34) in the die plate (36), further comprising at least one filling and dosing station, in which material to be pressed is loaded into the cavities (34), and comprising at least one pressing station (46, 48), in which the material loaded into the cavities (34) is pressed into pellets by means of the upper and lower press punches (18, 20), **characterized in that** the upper and/or lower punch arrangement is designed according to any of claims 1 to 6.

## Revendications

1. Ensemble poinçon pour une presse, en particulier une presse rotative, comportant au moins un poinçon de pressage (18, 20) avec une tête de poinçon (26, 28), une région d'outil (30, 32) et une tige de poinçon (22, 24) s'étendant entre la tête de poinçon (26, 28) et la région d'outil (30, 32), comportant en outre au moins un guide de poinçon (14, 16) avec au moins un alésage de guidage (74, 76) dans lequel la tige de poinçon (22, 24) de l'au moins un poinçon de pressage (18, 20) est guidé axialement de façon mobile, et au moins une manchette d'étanchéité (80) à longueur modifiable entourant la tige de poinçon (22, 24) au moins par tronçons, laquelle est maintenue avec sa première extrémité sur la tige de poinçon (22, 24) ou sur la région d'outil (30, 32) du poinçon de pressage (18, 20),
dans lequel la manchette d'étanchéité (80) est maintenue avec sa deuxième extrémité sur une paroi intérieure de l'alésage de guidage (74, 76),
**caractérisé en ce que**
la deuxième extrémité de la manchette d'étanchéité (80) est prise au piège de telle façon entre la paroi intérieure de l'alésage de guidage (74, 76) et la tige de poinçon (22, 24) dans une position de maintien par complémentarité de forme lorsque la tige de poinçon (22, 24) se trouve dans l'alésage de guidage (74, 76), qu'elle ne peut pas être détachée lorsque le poinçon de pressage est inséré dans l'alésage de guidage, la deuxième extrémité de la manchette d'étanchéité (80) comportant un anneau de fixation (82) reçu dans une rainure annulaire (78) formée dans la paroi intérieure de l'alésage de guidage (74, 76), et la manchette d'étanchéité étant conçue comme un soufflet ou un tube annelé.

2. Ensemble poinçon selon la revendication 1, **caractérisé en ce que** la deuxième extrémité de la manchette d'étanchéité (80) forme un joint d'étanchéité entre la paroi intérieure de l'alésage de guidage (74, 76) et la tige de poinçon (22, 24) lorsque la tige de poinçon (22, 24) se trouve dans l'alésage de guidage (74, 76), et dans lequel la manchette d'étanchéité (80) est conçue comme un soufflet ou un tube annelé.

3. Ensemble poinçon selon la revendication 1 ou 2, **caractérisé en ce que** la deuxième extrémité de la manchette d'étanchéité (80) est reçue dans la rainure annulaire (78) sous précontrainte.

4. Ensemble poinçon selon l'une des revendications 1 à 3, **caractérisé en ce que** la deuxième extrémité de la manchette d'étanchéité (80) est conçue élastique et encliquetée dans la rainure annulaire (78) ou clipsée dans celle-ci.

5. Ensemble poinçon selon l'une des revendications précédentes, **caractérisé en ce que** celui-ci comporte en outre au moins un élément de raclage (84), lequel est également maintenu sur la paroi intérieure de l'alésage de guidage (74, 76) et également pris au piège entre la paroi intérieure de l'alésage de guidage (74, 76) et la tige de poinçon (22, 24) lorsque la tige de poinçon (22, 24) se trouve dans l'alésage de guidage (74, 76), dans lequel l'élément de raclage (84) comporte un anneau de raclage (88) s'appliquant étroitement sur la périphérie de la tige de poinçon (22, 24) lorsque la tige de poinçon (22, 24) se trouve dans l'alésage de guidage (74, 76) et raclant le long de la tige de poinçon (22, 24) dans la direction axiale lors d'un déplacement axial du poinçon de pressage (18, 20), et dans lequel l'élément de raclage (84) est maintenu sur la paroi intérieure de l'alésage de guidage (74, 76) par les mêmes moyens de maintien et de retenue que la manchette d'étanchéité (80).

6. Ensemble poinçon selon la revendication 5, **caractérisé en ce que** l'élément de raclage (84) comporte un anneau de fixation (86) reçu dans une rainure annulaire (78) formée dans la paroi intérieure de l'alésage de guidage (74, 76).

7. Presse comportant au moins un ensemble poinçon selon l'une des revendications précédentes.

8. Presse rotative comprenant un rotor rotatif, dans laquelle le rotor comporte un ensemble poinçon supérieur et inférieur avec un guide de poinçon supérieur et inférieur (14, 16) ainsi qu'avec une pluralité de poinçons de pressage (18, 20) supérieurs et une pluralité de poinçons de pressage (18, 20) inférieurs et avec un disque à matrice (36) entre les guides de poinçon (14, 16), dans laquelle le poinçon de pressage (18, 20) coopère avec des logements (34) du disque à matrice (36), et en outre avec au moins une station de remplissage et de dosage, dans laquelle un matériau à presser est rempli dans les logements (34), ainsi qu'avec au moins une station de pression (46, 48) dans laquelle le matériau rempli dans les logements (34) est pressé à travers les poinçons de pressage supérieur et inférieur (18, 20) pour former des comprimés, **caractérisée en ce que** l'ensemble poinçon supérieur et/ou inférieur est conçu selon l'une des revendications 1 à 6.
